Europäisches Patentamt

**European Patent Office**

Office européen des brevets

(11) Veröffentlichungsnummer: **0 043 896**
**B1**

# (12) EUROPÄISCHE PATENTSCHRIFT

(45) Veröffentlichungstag der Patentschrift:
**15.02.84**

(21) Anmeldenummer: **81103076.6**

(22) Anmeldetag: **24.04.81**

(51) Int. Cl.³: **B 60 T 8/04,** B 60 T 17/18

(54) Antiblockiersystem.

(30) Priorität: **11.07.80 DE 3026254**

(43) Veröffentlichungstag der Anmeldung:
**20.01.82 Patentblatt 82/3**

(45) Bekanntmachung des Hinweises auf die Patenterteilung:
**15.02.84 Patentblatt 84/7**

(84) Benannte Vertragsstaaten:
**AT DE FR GB IT NL SE**

(56) Entgegenhaltungen:
**DE - A - 2 429 555**
**DE - A - 2 933 336**
**GB - A - 1 274 700**

(73) Patentinhaber: **WABCO Westinghouse**
**Fahrzeugbremsen GmbH, Am Lindener**
**Hafen 21 Postfach 91 12 80, D-3000 Hannover 91 (DE)**

(72) Erfinder: **Petersen, Erwin, Dr. Ing., Fliederweg 22,**
**D-3050 Wunstorf 1 (DE)**
Erfinder: **Knuchel, Pierre, 15, Allee des Ormes,**
**F-77910 Germigny L'Eveque (FR)**

(74) Vertreter: **Schrödter, Manfred, WABCO Westinghouse**
**Fahrzeugbremsen GmbH Am Lindener**
**Hafen 21 Postfach 91 12 80, D-3000 Hannover 91 (DE)**

ACTORUM AG

Antiblockiersystem

Die Erfindung bezieht sich auf ein Antiblockiersystem für Strassenfahrzeuge gemäss dem Oberbegriff des Patentanspruchs 1. Das Antiblockiersystem wirkt dabei auf die Räder einer oder mehrerer Achsen eines ein-, zwei- oder mehrachsigen Fahrzeugs.

Bei Antiblockiersystemen für Strassenfahrzeuge unterscheidet man u.a. zwischen der sogenannten Einzelradregelung (Individualregelung) und der Regelung nach dem Rad mit dem kleinsten Reibwert (Select-Low-Regelung).

Bei der ersten gemäss den Merkmalen des Oberbegriffs des Anspruchs 1 bekannten Bauweise ist jedes Rad des Fahrzeugs mit einem eigenen Sensor für die Erfassung der Radgeschwindigkeit und mit einem Regelventil zur Modulation des Bremsdruckes ausgerüstet. Die zugehörige Elektronik weist für jedes Rad einen eigenen Kanal auf. Der Vorteil dieser Bauweise besteht u.a. darin, dass ein minimaler Bremsweg erzielt wird.

Bei der zweiten Bauweise ist jede Achse oder jedes Rad mit einem eigenen Sensor ausgerüstet. Es ist jedoch pro Achse nur noch ein Regelventil vorhanden, durch welches der Bremsdruck für die beiden Räder dieser Achse gemeinsam gesteuert wird. Auf Fahrbahnen mit für die Räder der beiden Fahrzeugseiten unterschiedlichen Reibwerten wird das gemeinsame Regelventil so gesteuert, dass das Rad auf dem niedrigeren Reibwert am Blockieren gehindert wird. Das synchron mitgesteuerte andere Rad auf dem höheren Reibwert ist daher im allgemeinen unterbremst. Diese Bauweise hat insbesondere auf Fahrbahnen mit seitenweise unterschiedlichen Reibwerten den Vorteil einer besonders guten Seitenführungskraft. Dieses wird jedoch durch einen längeren Bremsweg erkauft.

Eine derartige Select-Low-Regelung kann weiterhin dazu führen, dass bei bestimmten Fehlern (z.B. bei einem Verklemmen des Regelventils) alle Räder der betreffenden Achse nicht mehr regelbar sind und je nach Art des Fehlers blockieren oder ungebremst bleiben. In diesem Fall wird das Antiblockiersystem für die betreffende Achse durch eine in der Elektronik enthaltene Sicherheitsschaltung abgeschaltet. Im ungünstigsten Fall, wenn nämlich die Räder der betroffenen Achse zur Bildung einer auch für die Regelung der anderen Räder erforderlichen Fahrzeugreferenzgeschwindigkeit mit benutzt werden, muss sogar das gesamte Antiblockiersystem durch die Sicherheitsschaltung abgeschaltet werden.

Eine Sonderform des Select-Low-Regelsystems besteht darin, dass wie bei einer Einzelradregelung alle Räder mit individuellen Sensoren und Regelventilen versehen sind, die Regelventile der Räder einer Achse aber synchron gesteuert werden. Bei dieser Bauart sind dem Select-Low-Prinzip entsprechende logische Verknüpfungen in der Elektronik oder geeignete Verknüpfungen der Ventilsteuersignale erforderlich. Diese Anpassung ist bei Antiblockiersystemen, die mit einem Mikrocomputer arbeiten, durch eine Änderung des Logikprogramms möglich.

Schliesslich ist in der deutschen Patentanmeldung DE-A-29 33 336 vorgeschlagen worden, eine 4-Kanal-Regelung eines mindestens zweiachsigen Fahrzeugs so auszuführen, dass jeweils eine Fahrzeugdiagonale autark arbeitet. Das bedeutet, dass bei einem Fehler in einer Fahrzeugdiagonalen nur die Regelkanäle dieser Diagonalen abgeschaltet werden und somit die Räder dieser Diagonalen blockieren können. Dagegen arbeitet die andere Diagonale ungestört weiter, so dass die Seitenführung des Fahrzeugs noch ausreichend ist.

Diese Form der diagonalen Abschaltung im Fehlerfall ist aber nicht möglich bei (Zweiachs-) Antiblockiersystemen mit nur einem Regelventil je Achse.

Der Erfindung liegt die Aufgabe zugrunde, bei einem Antiblockiersystem mit getrennten Regelkanälen für jedes Rad einer Achse die Systemsicherheit zu erhöhen. Dabei sollen die Bremsdrücke der gemeinsam geregelten Räder einer Achse auch dann noch geregelt bzw. gesteuert werden, wenn einer der beiden beteiligten Regelkanäle im Fehlerfall abgeschaltet wird.

Diese Aufgabe wird durch die im Patentanspruch 1 enthaltene Erfindung gelöst. In den Unteransprüchen sind vorteilhafte Ausbildungen enthalten.

Die Erfindung wird im folgenden anhand einer Zeichnung, welche Ausführungsbeispiele darstellt, näher erläutert. Dabei zeigen die

Fig. 1 ein 4-Kanal-System zur Einzelradregelung eines 2-Achs-Fahrzeugs nach dem Stand der Technik,

Fig. 2 ein Antiblockiersystem gemäss der Erfindung, dargestellt für eine Achse,

Fig. 3 eine erste Ausführung eines Wegeventils für das Antiblockiersystem,

Fig. 4 ein erfindungsgemässes Antiblockiersystem für eine kombinierte Druckluft-Hydraulik-Bremsanlage mit einer zweiten Ausführung des Wegeventils.

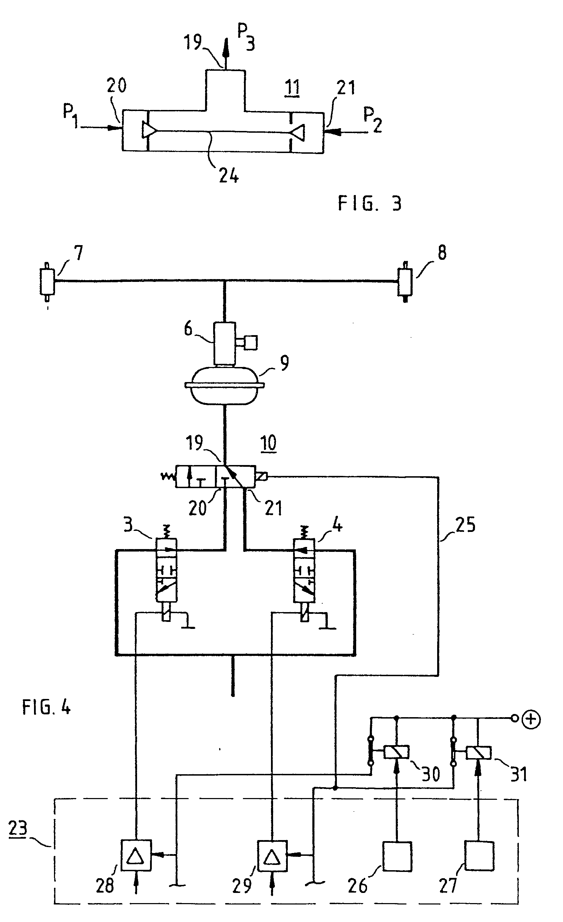

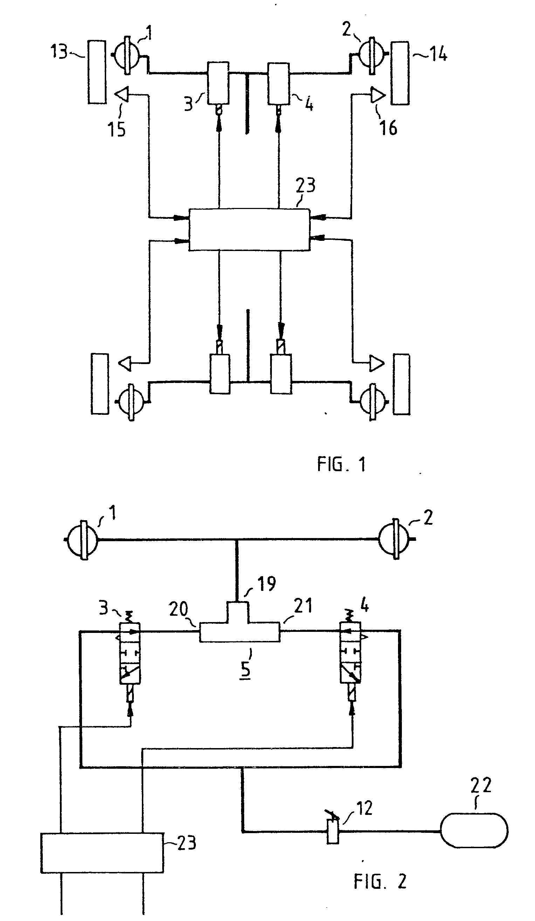

Wie in Figur 1 für ein Zweiachsfahrzeug schematisch dargestellt, besteht ein Antiblockiersystem für die Einzelradregelung in bekannter Weise aus einer Elektronik 23, welche von Radsensoren 15, 16 Eingangssignale erhält. Sobald die Elektronik 23 erkennt, dass die Räder 13, 14 der Vorderachse zu blockieren drohen, werden die Radbremszylinder 1, 2 durch Signale der Elektronik 23, welche auf Regelventile 3, 4 gegeben werden, entlüftet.

Die Regelung der Hinterräder erfolgt in entsprechender Weise. Die Bauteile für die hinteren Räder sind deshalb einfachheitshalber ohne Bezugsziffern dargestellt.

Das in Figur 1 gezeigte Regelsystem wird nun, wie in Figur 2 für eine Achse dargestellt, durch das Einfügen eines Wegeventils 5 modifiziert. Dabei ist der Ausgang 19 des Wegeventils 5 an die Bremszylinder 1, 2 angeschlossen. Die beiden Eingänge 20, 21 sind an Regelventile 3, 4 angeschlossen. Die Versorgung der Regelventile 3, 4 erfolgt in üblicher Weise über ein Bremsventil 12, welches an einen Druckmittelvorrat 22 angeschlossen ist. Die Regelventile 3, 4 werden wie in Figur 1 durch eine Elektronik 23 angesteuert. Der Einfachheit halber sind einige nicht zur Erfindung gehörende Teile der Bremsanlage wie Sensoren und Räder nicht dargestellt.

Das Wegeventil 5 ist so ausgebildet, dass nur einer der beiden Drücke, die an den beiden Eingängen 20, 21 anstehen, zum Ausgang 19 durchgelassen wird. Mit diesem Druck werden beide Bremszylinder 1, 2 gemeinsam beaufschlagt.

Das Wegeventil 5 kann auf zwei verschiedene Arten realisiert werden.

Eine vorteilhafte Möglichkeit zur Ausbildung des Wegeventils 5 besteht darin, ein Ventil zu verwenden, das rein mechanisch nur den niedrigeren der beiden Eingangsdrücke hindurchlässt. Ein solches, an sich bekanntes Ventil 11 ist schematisch in der Figur 3 dargestellt. Das Ventil besitzt einen Schieber 24, der vom höheren der beiden Eingangsdrücke P1, P2 betätigt wird. In der gezeichneten Stellung ist der Druck P1 grössere als P2, so dass der niedrigere Druck P2 gleich dem Ausgangsdruck P3 ist bzw. an den Ausgang 19 weitergeleitet wird. Die eingangs erwähnte Funktion Select-Low findet hier also nicht in der Elektronik 23, sondern im Wegeventil 5 bzw. 11 statt.

Wird im Fehlerfall beispielsweise der das Regelventil 3 steuernde Regelkanal abgeschaltet, dann wird von dem Regelventil 3 immer der vom Fussbremsventil 12 eingesteuerte volle Bremsdruck durchgesteuert. Dieser Bremsdruck kommt jedoch nicht in den Bremszylindern 1, 2 zur Wirkung, da er stets grösser oder gleich dem am Eingang 21 des Wegeventils 5, 11 anstehenden geregelten Bremsdruck ist und daher vom Wegeventil 5, 11 abgesperrt wird. Das Regelventil 4 in Verbindung mit dem Wegeventil 5, 11 setzt dann den Bremsdruck in den Bremszylindern 1, 2 soweit herab, dass das den Bremszylindern 2 zugeordnete Rad (vorne rechts) gerade nicht blockiert. Das andere Rad wird dann bei gleichmässigen Bremsen- und Fahrbahnbedingungen befriedigend mitgesteuert.

Diese Ausführung hat den Vorteil, dass in der Elektronik 23 keine besondere Schaltung für die Select-Low-Regelung, wie eingangs erwähnt, notwendig ist.

Eine zweite Ausbildung des Wegeventils 5 ist in Figur 4 dargestellt. Das Ventil ist hier als 3/2-Wegemagnetventil 10 ausgeführt, dessen Magnetwicklung über eine Leitung 25 angesteuert wird. Die Elektronik 23 enthält, wie schematisch dargestellt, Endverstärker 28, 29, von denen die angeschlossenen Regelventile 3, 4 gesteuert werden. Ausserdem enthält die Elektronik 23 die bereits eingangs erwähnten Verknüpfungen zur synchronen Steuerung der Regelventile 3, 4 gemäss dem Select-Low-Prinzip. Die Stromversorgung der Endverstärker 28, 29 lässt sich durch Leistungsschalter 30, 31, die hier als Relais ausgebildet sind, unterbrechen und somit der zugehörige Regelkanal einzeln oder gemeinsam mit in Figur 4 nicht dargestellten weiteren Regelkanälen abschalten. Wie eingangs erwähnt, ist in der deutschen Patentanmeldung DE-A-29 33 336.6 das gemeinsame Abschalten der Regelkanäle für diagonal gegenüberliegend angeordnete Fahrzeugräder vorgeschlagen worden. Die Ansteuerung der Leistungsschalter 30, 31 erfolgt durch zugehörige Sicherheitsschaltungen 26, 27.

Bei dem in Figur 4 dargestellten Betriebszustand werden beide Endverstärker 28, 29 mit Spannung versorgt. Gleichzeitig steuert der Leistungsschalter 31 des Magnetventils 10 über die Leitung 25 so an, dass das Regelventil 4 dauernd auf Durchgang geschaltet ist, während der Austritt des Regelventils 3 dauernd abgesperrt ist. Im Falle einer blockiergeschützten Bremsung moduliert dann allein das Regelventil 4 den Bremsdruck. Das Regelventil 3 wird zwar synchron mit angesteuert, moduliert aber nur den Druck in der Leitung bis zum Wegeventil 10.

Wird im Fehlerfall über den Leistungsschalter 30 der Endverstärker 28 abgeschaltet, erfolgt die Bremsdruckregelung der Achse weiterhin über das Ventil 4 und den zugehörigen Regelkanal. Wird dagegen im Fehlerfall über den Leistungsschalter 31 der Endverstärker 29 abgeschaltet, steuert automatisch das Wegeventil 10 um, so dass nunmehr die Bremsdruckregelung der Achse über das Regelventil 3 und den zugehörigen Regelkanal mit dem Verstärker 28 erfolgt.

Die Select-Low Verknüpfungen können von der Sicherheitsschaltung im Fehlerfall mit aufgetrennt werden.

Der Vorteil des beschriebenen Systems liegt darin, dass durch die Redundanz der Regelkanäle und Regelventile eine besonders hohe Systemsicherheit erreicht wird. Bei Auftreten eines Fehlers ist es möglich, den defekten Elektronik-Kanal einer Achse oder einer Fahrzeug-Diagonalen abzuschalten und mit dem verbleibenden intakten Elektronik-Kanal weiter zu regeln.

Weiterhin lässt sich durch den Einsatz des Wegeventils 11 ein bereits vorhandenes Antiblockiersystem für Einzelradregelung in einfacher Weise auf eine Select-Low-Funktion umstellen, ohne dass die Notwendigkeit besteht, eine spezielle Select-Low-Elektronik entwickeln zu müssen.

Besonders vorteilhaft ist schliesslich eine Anwendung des erfindungsgemässen Antiblockiersystems bei Fahrzeugen (beispielsweise Bussen), deren hydraulisch betätigte Radzylinder 7, 8 einer Achse über einen hydraulischen Hauptzylinder 6 und einen pneumatischen Vorspannzylinder 9 betätigt werden (Figur 4).

Bei einer getrennten Ansteuerung der Bremsen über zwei Vorspannzylinder kann es nämlich wegen der unvermeidlichen Wirkungsgradunterschiede von Vorspann- und Hauptzylinder zu seitenweise unterschiedlichen Bremskräften kommen. Dies ist sowohl bei ungeregelten Betriebsbremsungen als auch bei geregelten Bremsungen unerwünscht und wird durch die beschriebene Anordnung, bei der wegen der Select-Low-Regelung nur eine Vorspann-Haupt-Zylinderanordnung vorhanden ist, vermieden.

Das für die gemeinsame Regelung der Räder einer Achse beschriebene Antiblockiersystem ist sinngemäss auch anwendbar auf mehrere Achsen eines Fahrzeugs. Ebenso können andere Radgruppen gemeinsam geregelt werden, beispielsweise die auf der gleichen Fahrzeugseite befindlichen Räder eines Tandem-Achsaggregates.

## Patentansprüche

1. Antiblockiersystem für Strassenfahrzeuge mit folgenden Merkmalen:

a) Das Antiblockiersystem weist für jedes geregelte Rad einen Regelkanal auf

b) ein Regelkanal besteht aus einer Elektronik (23), einem Regelventil (3, 4) und einem Radsensor (15, 16)

c) die Elektronik (23) eines Regelkanals enthält einen Endverstärker (28, 29) und eine Sicherheitsschaltung (26, 27)

d) die Eingänge der beiden Regelventile (3, 4) für eine Achse sind gemeinsam über ein Bremsventil (12) an einen Druckmittelvorrat (22) angeschlossen,

gekennzeichnet durch folgende Merkmale:

e) die Bremszylinder (1, 2; 7, 8) der Räder einer Achse oder einer anderen aus zwei Rädern bestehenden Radgruppe sind gemeinsam an einen Ausgang (19) eines Wegeventils (5; 10; 11) angeschlossen

f) die beiden Eingänge (20, 21) des Wegeventils (5; 10; 11) sind an die Ausgänge je eines Regelventils (3, 4) des Antiblockiersystems angeschlossen.

2. Antiblockiersystem nach Anspruch 1, dadurch gekennzeichnet, dass das Wegeventil (5) als pneumatisch geschaltetes 3/2-Wegeventil (11) ausgebildet ist, das jeweils den Eingang (20, 21) mit dem niedrigeren Druck mit dem Ausgang (19) verbindet (Fig. 2).

3. Antiblockiersystem nach Anspruch 1, wobei die Elektronik (23) so geschaltet ist, dass für beide Regelventile (3, 4) einer Achse Ausgangssignale nach dem Select-Low-Prinzip erzeugt werden, dadurch gekennzeichnet, dass das Wegeventil (5) als 3/2-Wege-Magnetventil (10) ausgebildet ist, welches über eine elektrische Leitung (25) derart umsteuerbar ist, dass bei voll funktionsfähiger Elektronik (23) jeweils nur das eine (4) von den beiden vorgeschalteten Regelventilen (3, 4) mit den Radbremszylindern (7, 8) verbunden ist, während der Ausgang des anderen Regelventils (3) nur dann durchgeschaltet ist, wenn das normalerweise verbundene Regelventil (4) wegen eines Fehlers im zum Endverstärker (29) gehörenden Kanal der Elektronik (23) ausser Betrieb gesetzt ist (Fig. 4).

4. Antiblockiersystem nach Anspruch 3, wobei zur Unterbrechung der Stromversorgung für die beiden Endverstärker (28, 29) der Elektronikkanäle zwei Leistungsschalter (30, 31) vorgesehen sind, die von je einer Sicherheitsschaltung (26, 27) ansteuerbar sind, dadurch gekennzeichnet, dass die Wicklung des Magnetventils (10) über eine elektrische Leitung (25) mit der Stromversorgung für den Endverstärker (29) verbunden ist (Fig. 4).

5. Antiblockiersystem nach einem oder mehreren der Ansprüche 1 bis 4 für eine Anwendung bei einem Fahrzeug mit hydraulisch betätigten Radbremsen,

gekennzeichnet durch folgende Merkmale:

a) an den Ausgang (19) des Wegeventils (5, 10, 11) ist ein pneumatischer Vorspannzylinder (9) angeschlossen

b) der Vorspannzylinder (9) ist mit einem hydraulischen Hauptzylinder (6) verbunden

c) an den Hauptzylinder (6) sind Hydraulik-Radzylinder (7, 8) angeschlossen (Fig. 4).

## Revendications

1. Système antiblocage pour véhicules routiers, présentant les particularités suivantes:

a) le système antiblocage comporte un canal de régulation pour chaque roue réglée

b) un canal de régulation est constitué par une électronique (23), une vanne de régulation (3, 4) et un capteur de roue (15, 16)

c) l'électronique 23 d'un canal de régulation comprend un amplificateur de sortie (28, 29) et un circuit de sécurité (26, 27)

d) les entrées des deux vannes de régulation (3, 4) d'un essieu sont reliées en commun par une soupape de frein (12) à un réservoir de fluide de pression (22),

et caractérisé en ce que:

e) les cylindres de frein (1, 2; 7, 8) des roues d'un essieu ou d'un autre groupe de deux roues sont reliés en commun à une sortie (19) d'un distributeur (5; 10; 11)

f) les deux entrées (20, 21) du distributeur (5; 10; 11) sont reliées chacune à la sortie d'une vanne de régulation (3, 4) du système antiblocage.

2. Système antiblocage selon revendication 1, caractérisé en ce que le distributeur (5) est réalisé sous forme d'un distributeur pneumatique 3/2 (11), qui relie l'entrée (20, 21) présentant la plus faible pression à la sortie (19) (figure 2).

3. Système antiblocage selon revendication 1, dans lequel l'électronique (23) est connectée de façon que des signaux de sortie sont produits selon le principe de sélection basse pour les deux vannes de régulation (3, 4) d'un essieu, ledit système étant caractérisé en ce que le distributeur (5) est réalisé sous forme d'un distributeur électromagnétique 3/2 (10), qu'une ligne électrique (25) permet d'inverser de façon qu'une seule (4) des deux vannes de régulation (3, 4) en amont soit reliée aux cylindres de frein de roue (7, 8) quand l'électronique (23) est en parfait état, tandis que la sortie de la seconde vanne de régulation (3) est connectée uniquement quand la vanne de régulation (4) normalement reliée est mise hors service par suite d'un défaut dans le canal de l'électronique (23) correspondant à l'amplificateur de sortie (29) (figure 4).

4. Système antiblocage selon revendication 3, dans lequel deux interrupteurs de puissance (30, 31), commandés chacun par un circuit de sécurité (26, 27), sont prévus pour interrompre l'alimentation des deux amplificateurs de sortie (28, 29) des canaux de l'électronique, ledit système étant caractérisé en ce que l'enroulement du distributeur électromagnétique (10) est relié par une ligne électrique (25) à l'alimentation de l'amplificateur de sortie (29) (figure 4).

5. Système antiblocage selon une quelconque des revendications 1 à 4 pour application à un véhicule équipé de freins de roue hydrauliques, ledit système étant caractérisé en ce que:

a) un cylindre de précompression pneumatique (9) est relié à la sortie (19) du distributeur (5, 10, 11)

b) le cylindre de précompression (9) est relié à un maître-cylindre hydraulique (6)

c) des cylindres hydrauliques (7, 8) sont reliés au maître-cylindre (6) (figure 4).

## Claims

1. Anti-lock brake system for road vehicles having the following features:

a) for each controlled wheel the anti-lock brake system has one control channel,

b) a control channel comprises an electronic system (23), a control valve (3, 4) and a wheel sensor (15, 16),

c) the electronic system (23) of a control channel contains an output amplifier (28, 29) and a safety circuit (26, 27),

d) the inlets of the two control valves (3, 4) for one axle are together connected via a brake valve (12) to a pressure medium supply (22),

characterised by the following features:

e) the brake cylinders (1, 2; 7, 8) of the wheels of one axle or of another wheel group comprising two wheels are together connected to an outlet (19) of a directional control valve (5; 10; 11),

f) the two inlets (20, 21) of the directional control valve (5; 10; 11) are connected respectively to the outlets of the directional control valves (3, 4) of the anti-lock brake system.

2. Anti-lock brake system according to claim 1, characterised in that the directional control valve (5) is constructed as a pneumatically switched 3/2-way control valve (11) that connects with the outlet (19) whichever inlet (20, 21) has the lower pressure (Fig. 2).

3. Anti-lock brake system according to claim 1 in which the electronic system (23) is connected in such a manner that for the two control valves (3, 4) of one axle output signals according to the select-low principle are produced, characterised in that the directional control valve (5) is constructed as a 3/2-way control solenoid valve (10) which can be reversed by means of an electric line (25) in such a manner that, if the electronic system (23) is fully functional, in each case only one (4) of the two control valves (3, 4) connected upstream is connected to the wheel brake cylinders (7, 8), while the outlet of the other control valve (3) is only connected when the control valve (4) which is normally connected is put out of operation owing to a fault in the channel of the electronic system (23) associated with the output amplifier (29) (Fig. 4).

4. Anti-lock brake system according to claim 3, in which, to interrupt the current supply for the two output amplifiers (28, 29) of the electronic channels, two power switches (30, 31) are provided, each of which can be controlled by a safety circuit (26, 27), characterised in that the coil of the solenoid valve (10) is connected via an electric line (25) to the current supply for the output amplifier (29) (Fig. 4).

5. Anti-lock brake system according to one or more of claims 1 to 4 for use in a vehicle having hydraulically activated wheel brakes, characterised by the following features:

a) a pneumatic pre-tension cylinder (9) is connected to the outlet (19) of the directional control valve (5, 10, 11),

b) the pre-tension cylinder (9) is connected to a hydraulic master cylinder (6),

c) hydraulic wheel cylinders (7, 8) are connected to the master cylinder (6) (Fig. 4).

//2

FIG. 3

FIG. 4

FIG. 1

FIG. 2